# EUROPEAN PATENT APPLICATION

(11) **EP 1 914 117 A1**
(43) Date of publication of application: **23.04.2008**
(21) Application number: 07017787.8
(22) Date of filing: 11.09.2007
(51) Int. Cl.: B60R 1/00, B60R 11/02

(54) **A method of driving support and a driving support apparatus**

(30) Priority: 16.10.2006 JP 2006281806
(71) Applicant: Aisin AW Co., Ltd., Fujii-cho Anjo-shi, Aichi 444-1192 (JP)
(72) Inventor: Kubota, Tomoki, Okazaki-shi Aichi 444-8564 (JP); Takagi, Minoru, Okazaki-shi Aichi 444-8564 (JP)
(74) Representative: Kramer - Barske - Schmidtchen

(57) **Abstract**

A driving support unit has a picture signal input section to which picture signals from a camera that films an area around a vehicle are input, a sensor I/F section that detects a head position of a driver sitting in a driving seat of the vehicle, and a control section. The control section judges whether the driver's head has entered into a projection range in which projection light is output from a projector onto a pillar, and an image processor outputs to the projector outputting data that designate the driver's head position and surrounding area as a non-projection region.

## Description

The present invention relates to a driving support method and a driving support system.

In-vehicle systems that film with onboard cameras the regions that are blind spots for the driver and shows the images filmed on a display or the like were developed some time ago as devices to support safe driving. One such device that has been put forward is a system that films with onboard cameras the blind-spot regions that are caused by the front pillars of the vehicle, and displays on the insides of the front pillars the images filmed. The front pillars are a pair of pillars, one on the left and one on the right, that support the windshield and the roof. Viewed by the driver sitting in the driving seat, they are located diagonally to the front and block out part of the driver's field of vision. Nevertheless, they are members for which a predetermined thickness must be assured for the sake of safety.

Such a system has cameras that are installed to the vehicle body, an image processor that performs image processing of the picture signals that are output from the cameras, and a projector or the like that projects the images onto the insides of the front pillars. Thus the external background is, as it were, rendered visible through the front pillars, so that at intersections and the like, the form of the road ahead of the vehicle and any obstructions ahead of the vehicle can be determined.

Japanese Patent Application Publication No. JP-A-11-184225 discloses a system whereby a projector is provided on the instrument panel in the vehicle interior, and mirrors that reflect the projection light are interposed between the projector and the pillars. In such a case, the angles of the mirrors have to be adjusted because the images must be displayed so as to conform with the shape of the pillars.

However, it is difficult to adjust the mirrors so that the light is projected in the correct positions relative to the pillars. And if the mirrors deviate from their angles, it is hard to return them to appropriate angles. Providing the projector on the inside of the roof at the rear of the vehicle interior or in some like location suggests itself as a remedy for this, but in that case the driver's head might intervene between the projector and the pillars. Further, there would be danger that the driver might look directly at the projector light if he or she directed his or her gaze toward the projector.

The present invention was accomplished in consideration of the foregoing problems, and has as its purpose to provide a driving support method and a driving support system in which projection of images onto pillars is implemented according to a driver's position.

According to a first aspect of the present invention, a head position of a driver is sensed, and it is then determined whether the head has entered into a projection range of a projection device. If it is determined that the head has entered the projection range, the head position and surrounding area are designated as a non-projection region. Hence, should the driver inadvertently direct his or her gaze toward the projection device when his or her head is positioned in proximity to a pillar, projection light will not directly enter his or her eyes.

According to a second aspect of the present invention, a driving support system senses the head position of the driver, and determines whether or not the head position overlaps with the projection range of the projection device. If it is determined that the head position overlaps with the projection range, the head position and surrounding area are designated as a non-projection region. Hence, should the driver accidentally direct his or her gaze toward the projection device when his or her head is positioned in proximity to a pillar, the projection light will not directly enter his or her eyes.

According to a third aspect of the present invention, only the projection range where the head has entered is designated as a non-projection region, so that even when the head is positioned in proximity to a pillar, the pillar blind-spot region can be displayed while at the same time the projection light will be prevented from directly entering the driver's eyes.

According to a fourth aspect of the present invention, when the head position of the driver overlaps with any of various areas of an image display region of the pillar, that area becomes a non-display region. Hence there is no need for serial computation of the regions of overlap with the head position, and thereby the processing volume can be reduced.

According to a fifth aspect of the present invention, when the driver's head enters the projection range, the images are displayed at the base end portion of the pillar, which is distanced from the head position. Hence, the processing is rendered simple and moreover the projection light will not directly enter the driver's eyes.
FIG. 1 is a block diagram of a driving support system of an embodiment of the present invention;
FIG. 2 is an explanatory diagram of a camera filming range;
FIG. 3 is an explanatory diagram of the positions of a projector and a pillar;
FIG. 4 is a side view of a pillar seen from an interior;
FIG. 5 is an explanatory diagram of a mask pattern;
FIG. 6 is an explanatory diagram of a path of light projected by a projector;
FIG. 7 is an explanatory diagram of the positions of sensors;
FIG. 8 is an explanatory diagram of an image display region divided into four;
FIG. 9 is an explanatory diagram of a processing sequence of the embodiment;
FIG. 10 is an explanatory diagram of a background image with a head and surrounding area non-displayed;
FIG. 11 is an explanatory diagram of a variant processing sequence; and
FIG. 12 is an explanatory diagram of another variant processing sequence.

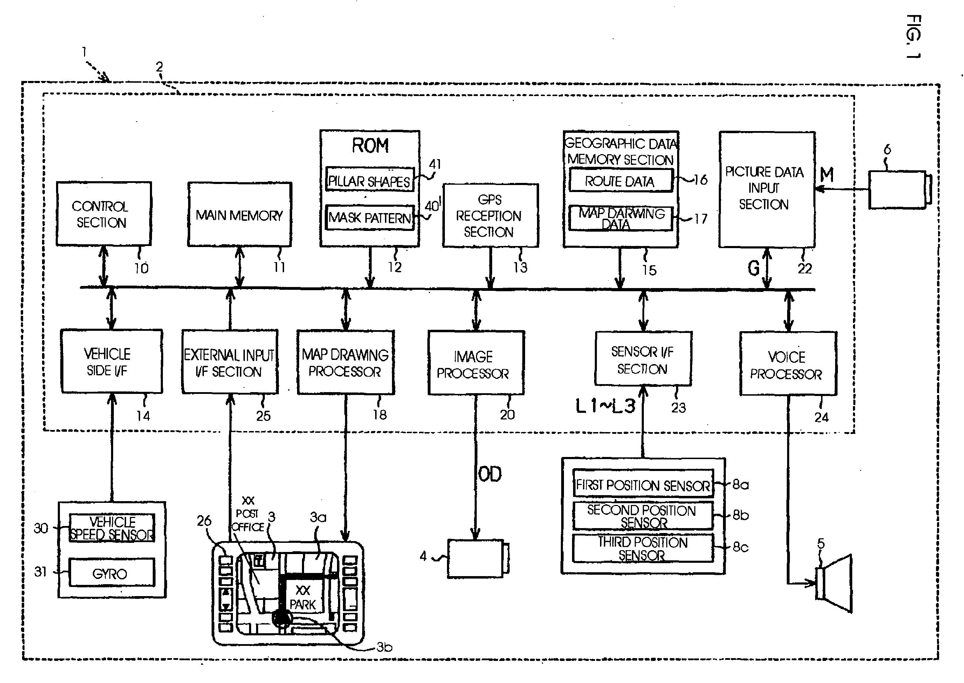

A specific embodiment of the present invention will now be described with reference to FIGS. 1 to 10 among the accompanying drawings. FIG. 1 is a block diagram explicating the configuration of a driving support system 1 installed in an automobile.

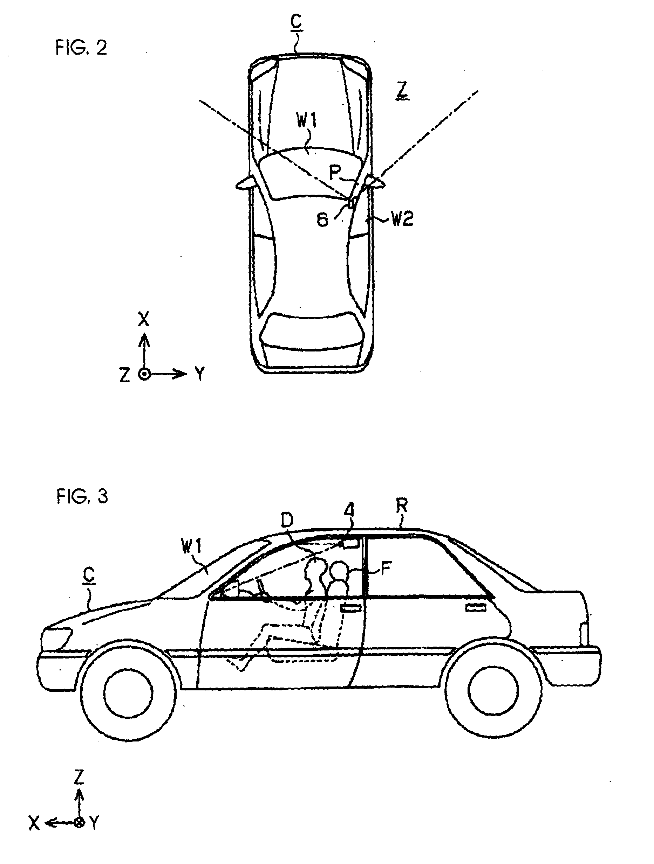

The driving support system 1 is carried in a vehicle C (see FIG. 2) and includes a driving support unit 2 serving as a driving support device, a display 3 serving as a display unit, a projector 4 serving as a projection device, a speaker 5, a camera 6 serving as a filming unit, and first to third position sensors 8a to 8c, as shown in FIG. 1.

The driving support unit 2 includes a control section 10 constituting a detection unit and an entry judgment unit, a nonvolatile main memory 11, a ROM 12, and a GPS reception section 13. The control section 10 is a CPU, MPU, ASIC or the like, and performs the main control of the various types of processing in accordance with driving support programs contained in the ROM 12. The main memory 11 temporarily stores the results of computations by the control section 10.

Position sensing signals indicating the latitude, longitude and other coordinates received by the GPS reception section 13 from GPS satellites are input to the control section 10, which computes the absolute position of the vehicle by means of radio navigation. Also input to the control section 10, via a vehicle side I/F section 14 of the driving support unit 2, are vehicle speed pulses and angular velocities from a vehicle speed sensor 30 and a gyro 31, respectively, provided in the vehicle C. By means of autonomous navigation using the vehicle speed pulses and the angular velocities, the control section 10 computes the relative position from a reference position and pinpoints the vehicle position by combining the relative position with the absolute position computed using radio navigation.

The driving support unit 2 also has a geographic data memory section 15. The geographic data memory section 15 is an external storage medium such as a built-in hard disc, optical disc or the like. In the geographic data memory section 15 are stored various route network data ("route data 16" below) serving as map data for searching for routes to the destination, and various map drawing data 17 for outputting map screens 3a to the display 3.

The route data 16 are data relating to roads within a mesh dividing the whole country into compartments. The route data 16 include identifiers for each mesh, node data relating to nodes indicating intersections and road endpoints, identifiers for the links connecting the nodes, and data on link cost and so forth. Using the route data 16, the control section 10 searches for a recommended route to the destination and judges whether or not the vehicle C is approaching a guidance point for an intersection or the like.

The map drawing data 17 are data for depicting road forms, backgrounds and the like, and are stored in the individual meshes into which the map of the whole country is divided. On the basis of the road form data among the map drawing data 17, the control section 10 judges whether or not there are curves of a predetermined curvature or greater ahead of the vehicle C.

As FIG. 1 shows, the driving support unit 2 has a map drawing processor 18. The map drawing processor 18 reads out from the geographic data memory section 15 the map drawing data 17 for drawing maps of the vehicle position surroundings, then generates data for map output and temporarily stores such in a VRAM not shown in the drawings. Further, the map drawing processor 18 outputs to the display 3 picture signals that are based on the map outputting data, so that a map screen 3a such as shown in FIG. 1 is displayed. Also, the map drawing processor 18 superimposes on the map screen 3a a vehicle position marker 3b that indicates the vehicle position.

Further, the driving support unit 2 has a voice processor 24. The voice processor 24 has voice files not shown in the drawings, and outputs to the speaker 5 voices that, for example, give guidance on the route to the destination. Moreover, the driving support unit 2 has an external input I/F section 25. Input signals that are based on the user input operation via operating switches 26 adjoining the display 3, and via the touch panel-style display 3, are input to the external input I/F section 25, which outputs such signals to the control section 10.

The driving support unit 2 also has a picture data input section 22 that serves as a picture signal acquisition unit, and an image processor 20 that serves as an output control unit and an image processing unit and into which image data G from the picture data input section 22 are input. The camera 6 provided in the vehicle C is driven according to control by the control section 10. Picture signals M taken by the camera 6 are input to the picture data input section 22.

The camera 6 is a camera that takes color images, and includes an optical mechanism made up of lenses, mirrors and so forth, and a CCD imaging element (neither of which is shown in the drawings). As FIG. 2 shows, the camera 6 is installed on the outside of the bottom end of a right-side front pillar P (below, simply "pillar P") of the vehicle C, with the optical axis oriented toward the right side of the space ahead of the vehicle C. In the present embodiment the driving seat is located in the right side of the vehicle C, and therefore the camera 6 is located on the driving seat side. The camera 6 images a lateral zone Z that includes the right side of the space ahead of the vehicle C and part of the space on the right side of the vehicle C.

The picture signals M output from the camera 6 are digitized by the picture data input section 22 into image data G, which are output to the image processor 20. The image processor 20 performs image processing on the image data G and outputs the processed image data G to the projector 4.

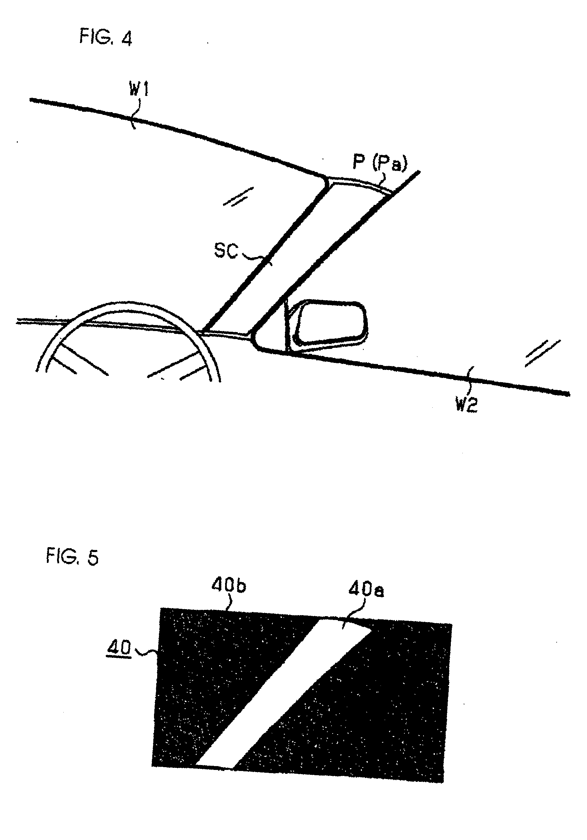

As FIG. 3 shows, the projector 4 is on the inside of the roof R, being installed in a position close to vertically above a front seat F that seats a driver D, where images can be projected onto the inner surface of the right-side pillar P of the vehicle C (see FIG. 4). As FIG. 4 shows, a screen SC that is cut to match the shape of the pillar P is stuck onto an inner surface Pa of the pillar P. The focal point of the projector 4 is adjusted to coincide with this screen SC. Note that in cases where the inner surface Pa of the pillar P is of a material and a shape enabling it to receive the projection light output from the projector 4 and display such as clear images, the screen SC may be omitted.

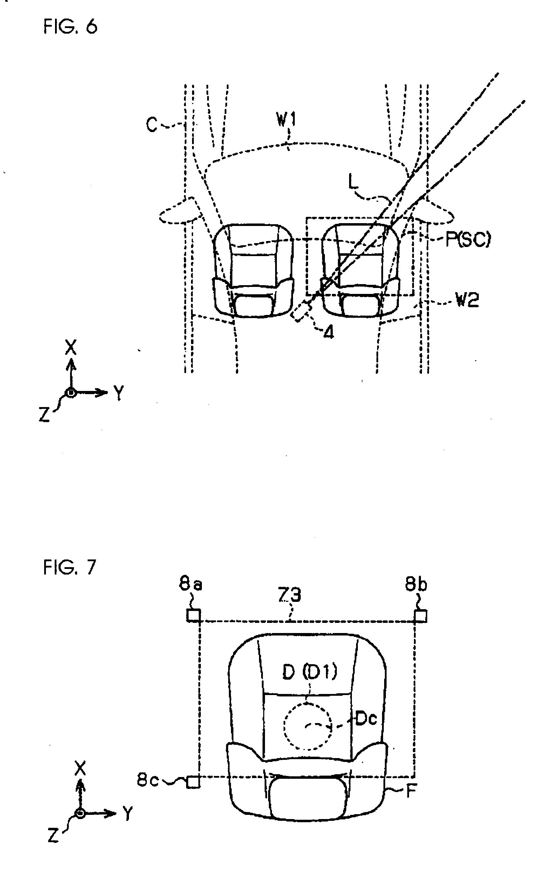

Also, a mask pattern 40 and pillar shapes 41 are stored in the ROM 12 of the driving support unit 2 in advance during the manufacturing process, as shown in FIG. 1. The mask pattern 40 is constituted, as FIG. 5 shows, of data for applying a mask to the image data G, and is made up of an image display region 40a that constitutes the projection range and conforms with the shape of the inner surface of the pillar P, and a mask 40b. The image processor 20 generates outputting data OD that, as regards the image display region 40a zone, are for displaying therein images according to the image data G filmed by the camera 6, and as regards the mask 40b zones, are for non-display thereof by the projector 4. Upon generating such outputting data OD, the image processor 20 sends the outputting data OD to the projector 4. Subsequently, as shown in FIG. 6, projection light L is output from the projector 4 onto the screen SC on the pillar P, and thereby images are projected onto the screen SC. At the same time, the mask 40b prevents images from being projected onto a windshield W1 or a door window W2 that flank the screen SC.

The pillar shapes 41 are constituted of data that represent the contours of the pillar as a pattern or as coordinates, and thus vary depending on the vehicle C. On the basis of the pillar shapes 41, the control section 10 is able to acquire coordinates representing the contours of the pillar P.

The driving support unit 2 further has, as FIG. 1 shows, a sensor I/F section 23 constituting a sensing unit. Sensing signals from the first to third positions sensors 8a to 8c are input into the sensor I/F section 23. The first to third positions sensors 8a to 8c are ultrasound sensors, and as FIG. 7 shows, are located in the vehicle interior in the area around the front seat F that seats the driver D. The first position sensor 8a is installed in proximity to the rearview mirror (omitted from the drawings), being located at almost the same height as a head D1 of the driver D or in a slightly higher position.

The second position sensor 8b is installed close to the top edge of the door window W2, so as to be located rightward and diagonally to the front of the driver D. The third position sensor 8c is on the left side of the front seat F, being installed on the inside of the roof R. The ultrasound waves emitted by the sensor heads, not shown in the drawings, of the position sensors 8a to 8c are reflected by the head D1 of the driver D. The position sensors 8a to 8c determine the time taken from emission of the ultrasound waves to reception of the reflected waves, and on the basis of the time determined, each calculates the respective relative distance L1 to L3 to the head D1. The relative distances L1 to L3 calculated are output to the control section 10 via the sensor I/F section 23. Alternatively the sensor I/F section 23 could compute the relative distances L 1 to L3 to the head D 1 on the basis of the signals from the position sensors 8a to 8c.

When the driving seat is occupied, the control section 10 acquires, using triangulation and other commonly known methods, a head motion range Z3 through which the head D1 of a driver D of standard body type can move, and also, according to the relative distances L1 to L3 sensed by the first to third position sensors 8a to 8c, a center coordinate Dc of the head D1.

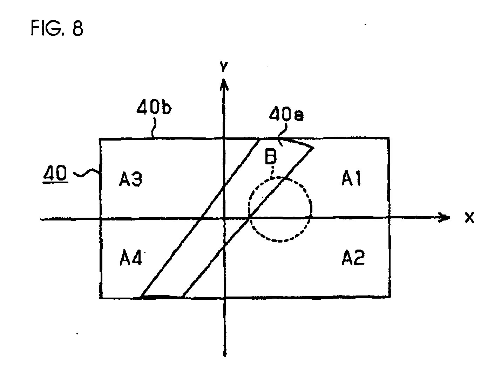

Next, the control section 10 judges whether the head D1 overlaps with the projection range of the projector 4. Using the center coordinate Dc (see FIG. 7) computed for the head D1, the control section 10 computes the coordinates of a sphere B that models the head and has the center coordinate Dc as its center, as shown in FIG. 8, then judges whether such sphere B overlaps with the image display region 40a of the pillar P. As shown in FIG. 8, if it judges that the sphere B does overlap with the image display region 40a, it then judges that the sphere B overlaps with which of the four areas A1 to A4 into which the image display region 40a is divided. In the case where the sphere B overlaps with the first area A1 and the second area A2 of the image display region 40a as in FIG. 8, the control section 10 controls the image processor 20 to generate picture signals that render the first area A1 and the second area A2 into non-display regions. As a result, those regions of the screen SC on the pillar P that correspond to the first area A1 and the second area A2 will not have images displayed thereon. This means that even if the driver inadvertently looks in the direction of the projector 4, the projection light L will not directly enter his or her eyes, since the projection light L from the projector 4 is not output in the proximity of the head D1.

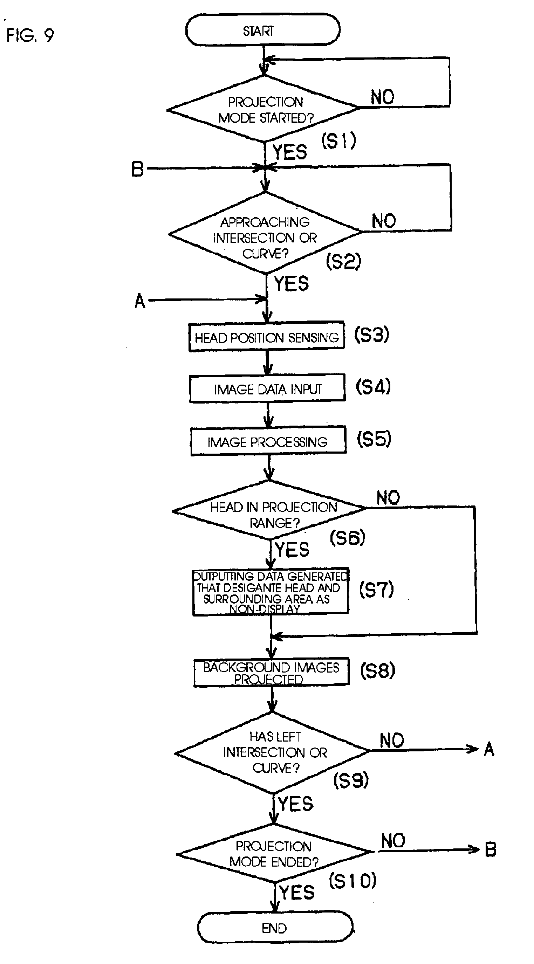

The processing sequence in the present embodiment will now be described with reference to FIG. 9. In step S1, the control section 10 of the driving support unit 2 waits for the start of the projection mode, in which background images are projected onto the inner surface of the pillar P. The projection mode will, for example, be judged to start when, as a result of operation of the touch panel or operating switches 26, the control section 10 receives a mode start request via the external input I/F section 25. Or, if the projection mode runs in the initial state, the projection mode can be judged to start based on the ON signal from the ignition module (omitted from the drawings).

Once the projection mode is judged to have started (YES in step S1), in step S2 the control section 10 judges, according to the route data 16 or the map drawing data 17, whether or not the vehicle is approaching an intersection or a curve. Specifically, the control section 10 judges that the vehicle C is approaching an intersection or curve if it determines that the present position of the vehicle C has entered within a predetermined distance (say 200 m) from an intersection, including a T-junction, or from a curve of a predetermined curvature or greater.

Once the vehicle is judged to be approaching an intersection or a curve (YES in step S2), in step S3 the control section 10 senses the head position of the driver D, using the position sensors 8a to 8c. To do so, the control section 10 acquires from the position sensors 8a to 8c, via the sensor I/F section 23, the relative distances L1 to L3 to the head D1, then pinpoints the center coordinate Dc of the head D1 on the basis of the relative distances L1 to L3.

Once the head position has been computed, in step S4 the image data G are input to the image processor 20 from the picture data input section 22, then in step S5 image processing is performed in accordance with the center coordinate Dc of the head D1. More precisely, by performing image processing of a commonly known kind, such as coordinate transformation, in accordance with the center coordinate Dc, the images are made to resemble the actual background more closely. At this point the image processor 20 reads the mask pattern 40 out from the ROM 12, reading pixel values for the image data G as regards the image display region 40a of the mask pattern 40, and non-display pixel values for the projector 4 as regards the other regions, then generates the outputting data OD.

Further, in step S6, the control section 10 judges whether the head D1 is in the projection range of the projector 4. As described earlier, the control section 10 computes the coordinates of the sphere B modeling the head D1 and having as its center the center coordinate Dc of the head D1, then judges whether the coordinate of the sphere B overlaps with the image display region 40a of the pillar P. If such overlap is judged to be present, the head D1 is judged to be in the projection range of the projector 4 (YES in step S6), and by designating as non-display those of the areas A1 to A4 with which the sphere B overlaps, outputting data OD are generated that render the head D1 and surrounding area non-displayed (step S7).

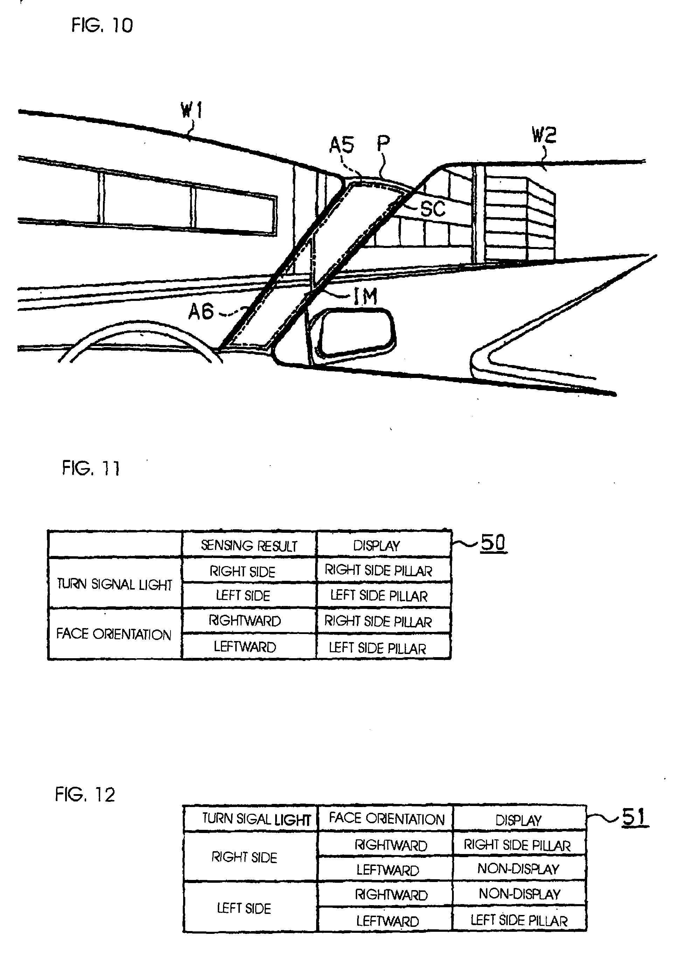

Once the outputting data OD have been generated, in step S8 the image processor 20 outputs the outputting data OD to the projector 4, and the projector 4 performs D/A conversion on the outputting data OD and projects the background images onto the screen SC on the pillar P. As a result, the background images IM are displayed as a picture on the screen SC, as shown in FIG. 10. The background images IM shown in FIG. 10 are those that are displayed in the case where the head D1 of the driver has entered into the projection range, with no image displayed (projected) in a non-projection area A5 with which the head D1 overlaps, and with the images of the blind-spot region due to the pillar P displayed in the remaining, projection area A6. In the case of the background images IM shown in FIG. 10, the non-projection area A5 corresponds to the first and second areas A1, A2 and the projection area A6 corresponds to the third and fourth areas A3, A4. Consequently, should the driver inadvertently look toward the projector 4 when the head D1 is in the area around the pillar P, the projection light L will be prevented from directly entering his or her eyes.

Once the background images IM are displayed on the screen SC, in step S9 the control section 10 judges whether or not the vehicle C has left the intersection or the curve. If it is judged that the vehicle C is approaching or has entered the intersection or the curve (NO in step S9), then the sequence returns to step S3 and the control section 10 performs control to the position sensors 8a to 8c and computes the center coordinate Dc of the head D1.

Once the vehicle C is judged to have left the intersection or the curve (YES in step S9), in step S10 the control section 10 judges whether or not the projection mode has ended. The control section 10 will, for example, judge the projection mode to have ended (YES in step S10) upon the touch panel or the operating switches 26 being operated, or upon inputting of an ignition module OFF signal, and will then terminate processing. If it is judged that the projection mode has not ended (NO in step S10), the sequence will return to step S2 and remain on standby until the vehicle C approaches an intersection or curve. When the vehicle C approaches an intersection or curve (YES in step S2), the above-described processing will be repeated.

The foregoing embodiment yields the following advantages.
(1) With the foregoing embodiment, the control section 10 of the driving support unit 2 computes the center coordinate Dc of the head D1 of the driver D according to the first to third position sensors 8a to 8c, and also, on the basis of the center coordinate Dc, judges whether the head D1 overlaps with any of the areas A1 to A4 of the image display region 40a, designating any such overlapping areas as non-display regions. Hence, when the head position of the driver D is close to the pillar P, the head position and surrounding area will become non-displayed, and therefore it will be possible to display the background image IM of the pillar P blind-spot region, and at the same time to prevent the projection light L from directly entering the driver's eyes should he or she inadvertently look toward the projector 4.
(2) With the foregoing embodiment, because the image display region 40a is divided into four areas A1 to A4 and it is judged whether the head position overlaps with any of the areas A1 to A4, there is no need for serial computation of the regions of overlap with the head position. Hence, the processing volume of the driving support unit 2 is reduced.

Numerous variants of the foregoing embodiment may be produced in the ways described below.

The position sensors 8a to 8c, which in the foregoing embodiment are provided on the inside of the roof R, in proximity to the rearview mirror and close to the upper edge of the door window W2, could be provided in other positions. Also, whereas in the embodiment there are three sensors for sensing the position of the head D1, there could alternatively be two, or four or more. Further, although the position sensors 8a to 8c are ultrasound sensors, they could as well be infrared ray sensors or other sensors.

In the foregoing embodiment the head D1 of the driver D is sensed by means of the position sensors 8a to 8c, which is constituted of ultrasound sensors, but alternatively the driver's head could be sensed by means of a camera in proximity to the driving seat which films the driving seat and surrounding area, together with image processing such as feature-point detection, pattern matching or the like.

In the foregoing embodiment the picture data input section 22 generates the image data G, but instead the image data G could be generated in the cameras 6 by A/D conversion.

In the foregoing embodiment the background images IM are displayed on the driver seat side pillar P (the right side front pillar in the embodiment), but the background images can also be displayed on the pillar on the opposite side to the driving seat. In that case, the coordinates of the head D1, and the angles of the blind spots blocked out by the pillars will be computed, and the cameras to be started will be switched according to such angles.

It would be possible in the foregoing embodiment, at the times when it is judged that the head D1 of the driver D has entered the projection range, to disregard any regions of overlap and to display the images on only the base end portion of the pillar P, corresponding to the third and fourth areas A3, A4 (see FIG. 8), which are distanced from the head position of the driver D. If this was done, the processing would be rendered simpler, and moreover it would still be possible to prevent the projection light L from directly entering the driver's eyes.

In the foregoing embodiment, the head D1 and surrounding area are rendered non-displayed when the projection range and the head position overlap, but alternatively the projector could be made not to output projection light at such times.

The foregoing embodiment could alternatively be configured so that the images are displayed on whichever of the right side and left side pillars P is on the same side to which the face of the driver D is oriented or on which a turn signal light is lit. The orientation of the face of the driver D would be sensed via image processing of the image data G. For example, as in a table 50 shown in FIG. 11, when the right side turn signal light from the viewpoint of the driver D was lit, the images would be displayed on the right side pillar P, and when the left side turn signal light was lit, the images would be displayed on the left side pillar P. Also, when the face of the driver D was oriented rightward, the images would be displayed on the right side pillar P, and when it was oriented leftward, the images would be displayed on the left side pillar P. Further, in cases where the side on which a turn signal light was lit coincided with the orientation of the face, the images could be displayed on the pillar on that side, as in a table 51 shown in FIG. 12. For example, when the lit turn signal light and the orientation of the face were both on/toward the right side, the images would be displayed on the right side pillar P, whereas when the lit turn signal light was on the right side but the face was oriented leftward, the images would not be displayed. After selection of the pillar P for display of the images, the head position of the driver D would be sensed and it would be judged whether the head position overlapped with the image display region 40a of the pillar P. In this way it would be possible to output only the minimum necessary projection light onto the pillars P, thus preventing direct entry of the projection light L into the driver D's eyes.

It is explicitly stated that all features disclosed in the description and/or the claims are intended to be disclosed separately and independently from each other for the purpose of original disclosure as well as for the purpose of restricting the claimed invention independent of the composition of the features in the embodiments and/or the claims. It is explicitly stated that all value ranges or indications of groups of entities disclose every possible intermediate value or intermediate entity for the purpose of original disclosure as well as for the purpose of restricting the claimed invention, in particular as limits of value ranges.

## Claims

1. A method for supporting driving by using a filming unit (6) installed to a vehicle (C) to film a blind-spot region caused by a pillar (P) of the vehicle (C) and projecting a picture filmed by the filming unit (6) onto the inside (SC) of the pillar (P), comprising:
sensing a head position (Dc) of a driver (D) sitting in a driving seat of the vehicle (C);
judging whether the driver's head (D1) has entered into a projection range in which projection light (L) is output from a projection device (C) onto the pillar (P); and
designating the head position (Dc) and surrounding area as a non-projection region if it is judged that the driver's head (D1) has entered into the projection range.

2. A driving support system that uses a filming unit (6) installed to a vehicle (C) to film a blind-spot region caused by a pillar (P) of the vehicle (C) and projects a picture filmed by the filming unit (6) onto the inside of the pillar, comprising:
a picture signal acquisition unit (22) to which picture signals from the filming unit (6) that films an area around the vehicle (C) are input;
a sensing device (8a, 8b, 8c) that senses a head position (Dc) of a driver (D) sitting in a driving seat of the vehicle (C);
an entry judgment unit (10) that judges whether the driver's head (D1) has entered into a projection range in which projection light (L) is output from a projection device (4) onto the pillar (P); and
an output control unit (20) that designates at least the head position (Dc) and surrounding area as a non-projection region if the entry judgment unit (10) judges that the driver's head (D1) has entered into the projection range.

3. The driving support system according to claim 2, wherein the output control unit (20) outputs to the projection device picture signals that designate a region of the projection range into which the driver's head (D1) has entered as a non-projection region, and a remainder of the projection range as a projection region in which a picture corresponding to the blind-spot region caused by the pillar (P) is projected.

4. The driving support system according to claim 2 or 3, wherein the output control unit (20) judges whether the head position (D1) of the driver (D) overlaps with any of multiple areas (A1, A2, A3, A4) into which an image display region (40) of the pillar (P) is divided, and designates any such overlapping areas (A1, A2) as a non-projection region.

5. The driving support system according to any one of claims 2 to 4, wherein when the driver's head (D1) has entered into the projection range, the projection light (L) is output only onto the base end portion (A6) of the pillar (P), which is distanced from the head position (D).
